# EUROPÄISCHE PATENTSCHRIFT

(11) **EP 2 554 925 B1**
(45) Veröffentlichungstag und Bekanntmachung des Hinweises auf die Patenterteilung: **20.05.2015**
(21) Anmeldenummer: 12177838.5
(22) Anmeldetag: 25.07.2012
(51) Int. Cl.: F24J 2/52, H01L 31/048, F24J 2/46, H01L 31/042

(54) **Stützelement für ein Solarmodul**
Support element for a solar module
Élément d'appui pour un module solaire

(30) Priorität: 26.07.2011 DE 202011050810 U; 18.11.2011 DE 202011052032 U
(43) Veröffentlichungstag der Anmeldung: 06.02.2013
(73) Patentinhaber: M. Münch Elektrotechnik GmbH & Co. KG, 96369 Weissenbrunn (DE)
(72) Erfinder: Münch, Mario, 96369 Weißenbrunn (DE); Graß, Peter, 95365 Rugendorf (DE)
(74) Vertreter: Pröll, Jürgen

(56) Entgegenhaltungen:
- EP-A1- 2 327 941
- EP-A2- 2 108 899

## Beschreibung

Die Erfindung betrifft ein Stützelement zur Anbringung eines Solarmoduls auf einer Unterkonstruktion gemäß Oberbegriff des Patentanspruchs 1.

Die Erfindung versteht unter "Unterkonstruktion" jedwede Art von Dächern oder Aufstellböden, profilierte Tragschienen, die auf einem Dach oder auf einem Boden aufliegen oder an Ständerkonstruktionen befestigt sind und mindestens ein C-Profil in Längsrichtung aufweisen oder einen längs verlaufenden Schraubkanal, an welchem das Stützelement mittels einer Schraube befestigbar ist. Die bekannten Stützelemente weisen im Wesentlichen eine Dreiecksform auf, vorzugsweise die Form eines rechtwinkligen Dreiecks, wobei die Hypotenuse als Auflagefläche für ein Solarmodul ausgebildet ist.

Aus der DE 20 2010 006 377 U1 ist eine Unterkonstruktion für eine Modulanlage, insbesondere eine Solarmodulanlage, mit wenigstens einem Modul bekannt, die unter anderem eine Trägerschiene aufweist, welche eine Längsnut entlang der Längsachse zum Aufnehmen einer elektrischen Leitung und mindestens eine Quernut senkrecht zu der Längsachse zur Aufnahme mindestens eines Stützelementes für das Modul aufweist. Das Stützelement ist untenseitig mit einem Fußteil und obenseitig einem Kopfteil versehen, wobei das Fußteil formschlüssig mit der Längsnut der Trägerschiene verbunden ist.

Da es sich bei den Solarmodulen um plattenförmige Module handelt, sind beim Stand der Technik horizontal und vertikal beabstandet mindestens eine solche Anzahl von Stützelementen mit Kopfteilen vorgesehen, um eine Vierpunktlagerung des Moduls zu gewährleisten. Bei den Solarmodulen kann es sich um Solarkollektormodule handeln, also solche, die eine Flüssigkeit, die durch Rohre innerhalb des Moduls fließt, aufwärmen. Die warme Flüssigkeit wird einem Wärmetauscher innerhalb eines Gebäudes zugeführt, um z. B. das Brauchwasser zu temperieren. Die Solarmodule können aber auch Photovoltaikmodule sein, die das von der Sonne auftreffende Licht unmittelbar in einen elektrischen Strom umsetzen. Die Module werden gegenüber der Erdoberfläche an der Unterkonstruktion in einem solchen geneigten Winkel angeordnet, dass eine möglichst effiziente Umwandlung der Sonnenenergie erreicht wird. Um unabhängig vom jeweiligen Dach oder Boden, der Lattenanordnung oder Dachneigung die Module installieren und einen optimalen Neigungswinkel vorgeben zu können, werden die Unterkonstruktionen mit den Stützelementen benötigt. Die Unterkonstruktion einschließlich der Stützelemente ist dabei so auszulegen, dass sie den angreifenden Windkräften standhält; dies gilt gleichermaßen auch für die Verbindung mit den Befestigungspunkten an dem Dach, der Aufstellfläche oder der Lattung.

Eine Lösung der Befestigung eines Solarmoduls an einer C-Profilschiene mittels eines Nutensteins ist beispielsweise aus der WO 2009/091238 A1 bekannt. Um eine einfachere Befestigung zu ermöglichen, ist es aus der DE 20 2010 000 545 U1 bekannt, einen Einsatz in ein C-Profil einzusetzen, der einen drehbaren Nutenstein aufweist, der durch Federdruck verschwenkt, wenn das Halteelement, das mit Druckwänden auf den Rahmen eines Solarmoduls greift, eingesetzt wird. Mittels einer Schraube erfolgt eine kraftschlüssige Verbindung. Eine solche Befestigungseinrichtung erleichtert die Montage auf dem Dach wesentlich.

Es hat sich gezeigt, dass die Montage mehrerer Stützelemente, die als Einzelstützelemente vorgesehen sind, auf einem Dach sehr aufwändig und für den Monteur nicht immer einfach zu handhaben ist, da jedes dieser Teile einzeln eingesetzt, ausgerichtet und an der Trägerschiene fixiert werden muss. Durch die Lagerung in Quernuten ist darüber hinaus eine exakte Ausrichtung der Trägerschienen auf dem Dach erforderlich, insbesondere dann, wenn mehrere Module in Reihe einerseits und übereinander angeordnet werden sollen, wie dies aus den Figuren in der DE 20 2010 006 377 U1 ersichtlich ist. Die einzelnen Stützelemente, die zudem unterschiedliche Höhen aufweisen, um die Neigungseinstellung der Module bewirken zu können, sind darüber hinaus relativ massiv und schwer und können beim Ablegen auf einem Dach auch leicht herunterfallen.

Aus der DE 20 2009 016 269 U1 ist ein Stützelement als Trageelement zur Fixierung von Solarmodulen, insbesondere Photovoltaikmodulen, an ortsfesten Bauwerken bekannt. Das Trageelement weist ein ebenes, zur Auflage auf eine Dachfläche bestimmtes Mittelteil auf, an dem sich die Auflageflächen endseitig jeweils an Abwinkelungen anschließen. Ein ähnliches Trageelement, das ebenfalls aus Blech geformt ist, ist aus der DE 20 2010 001 083 U1 bekannt; diese ist jedoch wesentlich länger ausgebildet, so dass auch mehrere Module aufgelegt werden können. Dabei kann es sich um Solarpaneele oder Wärmekollektoren handeln.

EP 2327 941 A1 offenbart ein aus Kunststoff bestehendes Trägermodul für Solarzellen. Das Trägermodul weist Rohre auf, die über Verbindungselemente miteinander verbunden sind. Die Verbindungselemente sind so ausgebildet, dass diese in die Rohre gesteckt werden können. Ferner weist das Trägermodul Halteteile auf. Ein Ende der Halteteile kann an ein Rohr aufgesteckt werden und das andere Ende der Halteteile ist zum Abstützen von Solarzellen ausgebildet. Um Solarmodule an dem Trägermodul sicher zu halten sind mehrere Halteelemente nebeneinander an einem unteren Rohr angeordnet und eine entsprechende Anzahl von Halteelementen ist an einem gegenüberliegenden Rohr angeordnet.

Der vorliegenden Erfindung liegt die Aufgabe zu Grunde, die Stützelemente so auszubilden, dass sie besonders leicht sind, eine hohe Stabilität und Verwindungssteifigkeit sowie eine hohe Festigkeit aufweisen und sicherstellen, dass auch bei großen Windbelastungen auf die Module diese fest an dem Boden, dem Dach, der Lattung oder einer anderen Unterkonstruktion fixiert bleiben und außerordentlich preiswert herstellbar sind. Eine weitere Teilaufgabe besteht darin, die Stützelemente mit Befestigungselementen oder Befestigungsabschnitten zu versehen, die an unterschiedliche Solarmodule anpassbar sind und Ausbildungen aufweisen, die eine Reihenanordnung ermöglichen.

Die Erfindung löst die Aufgabe durch Ausgestaltung des Stützelementes gemäß den Merkmalen des Patentanspruchs 1. Vorteilhafte Ausgestaltungen der Erfindung sind in den Unteransprüchen im Detail angegeben.

Das erfindungsgemäß ausgebildete Stützelement weist einen Basisabschnitt auf, mit dem das Stützelement auf eine Unterkonstruktion aufstellbar ist. Der Basisabschnitt besteht aus einem gestreckten Hohlprofil. Als Hohlprofil kommen runde Rohre, eckige Rohre, polygonale Rohre, quadratische Rohre aus Aluminium, aus Kunststoff, aus Edelstahl und anderen Werkstoffen in Betracht. Durch die Hohlprofilauslegung wird das Gewicht solcher Stützelemente wesentlich reduziert. An dem Hohlprofil ist an einer Stirnseite ein erstes Befestigungselement für ein Solarmodul vorgesehen. Die Oberseite dieses Befestigungselementes weist mindestens eine Anformung zur Lagerung eines Bereiches des aufgelegten Solarmoduls auf. Korrespondierend zum ersten Befestigungselement ist an der anderen Stirnseite des Basisabschnitts ein zweites Befestigungselement mindestens mit einer Anformung zur Befestigung eines gegenüberliegenden Bereiches des aufgelegten Solarmoduls vorgesehen.

Das erste Befestigungselement besteht aus einem durch Gehrungsschnitte freigeschnittenen, nach oben abgewinkelten Abstandsabschnitt und einem, demgegenüber durch einen eingebrachten Gehrungsabschnitt freigeschnittenen abgewinkelten Befestigungsabschnitt des Hohlprofils, der in einem definierten Winkel oberhalb des Basisabschnitts schräg verläuft. Das zweite Befestigungselement besteht aus einem am anderen Ende des Basiselementes durch eingebrachte Gehrungsschnitte freigeschnittenen Abstandsabschnitt, der länger sein kann als der Abstandsabschnitt des ersten Befestigungselementes und ebenfalls gegenüber dem Basisab schnitt vorsteht, um eine Schräglage des Solarmoduls auf einem flachen Aufstellboden realisieren zu können. Wenn die Stützelemente auf Schrägdächer montiert werden, können die beiden Befestigungsabschnitte auch parallel zum Basisabschnitt verlaufen, um einen optimalen Sonneneinstrahlwinkel zu erhalten. Die Höhen der Abstandsabschnitte werden also immer den Gegebenheiten am Verbauungsort angepasst. Handelt es sich um ein Flachdach, so ist eine Schrägstellung der Solarmodule erforderlich, d. h., der eine Abstandsabschnitt muss kurz gehalten, der andere dafür entsprechend lang ausgewählt werden, um einen gewünschten Aufstellwinkel des Solarmoduls realisieren zu können.

Die beiden Befestigungsabschnitte sind aufeinanderzu gerichtet und können gleiche oder unterschiedliche Längen aufweisen sowie mit Mitteln versehen sein, die eine Lagefixierung des aufgelegten Solarmoduls ermöglichen. Beispielsweise können Laschen aus der Oberfläche freigeschnitten und hochgebogen ausgeführt sein, die einen Anschlag bilden. Auch können in die freien Enden nach außen vorstehende U-förmige Halter einschiebbar und darin verankerbar sein, die die Solarmodule im Randbereich übergreifen. Die Gehrungsschnittkanten, die nach dem Abwinkeln aneinander liegen, sind mindestens punktweise miteinander verschweißt, so dass ein stabiles Stützelement gegeben ist. Die Abstandsabschnitte sowie die Befestigungsabschnitte bilden mit dem Basiselement einen oben offenen Träger, der auf eine Unterkonstruktion aufgesetzt oder auch hieran befestigt werden kann. Die lichte Weite zwischen den abgewinkelten Abstandsabschnitten kann beispielsweise ca. 800 mm bis ca. 1.050 mm oder größer sein. Das Hohlprofil kann aus dünnwandigem Blech bestehen, das z. B. zu einem rechteckförmigen Profil gefaltet ist. Es kann aber auch aus einem Stranggussprofil, gefertigt aus Aluminium, bestehen, das eine Wandstärke von z. B. ca. 0,5 mm bis ca. 1,2 mm aufweist, wobei aufgrund der Profilgebung des Hohlprofils eine ausreichende Stabilität und Biegesteifigkeit gegeben sind, um den gestellten Anforderungen entsprechen zu können. Um Material einsparen zu können, können die Befestigungsabschnitte Längen von ca. 50 mm bis ca. 150 mm aufweisen. Bei Verwendung eines rechteckförmigen Hohlprofils kann das Basiselement beispielsweise eine Breite von 100 mm und eine Länge von mehr als 1.000 mm aufweisen.

Um eine leichte Montage an einer Trägerschiene zu ermöglichen, können an der Unterseite des Basisabschnittes zapfenförmige Elemente in bekannter Art vorgesehen sein. Besonders preiswert sind solche Ausrichtmittel anbringbar, indem in den unteren Boden des Basisabschnitts ein zungenförmiger Freischnitt eingebracht wird, z. B. von der Biegungskante beginnend, so dass sich beim Umbiegen der seitlichen Abstandsabschnitte die laschenförmige Positionierhilfe automatisch aufstellt. Solche Positionierhilfen sind an beiden Seiten des Basisabschnittes vorgesehen, so dass ohne irgendwelche zusätzlichen Maßnahmen ein solches Stützelement auf eine Trägerschiene aufsetzbar ist und die Positionierhilfen in den Schlitz der Trägerschiene eingreifen können. Selbstverständlich können auch zapfenförmige Elemente angeschraubt, angeklebt oder angeschweißt werden, was aber zusätzliche Arbeitsgänge notwendig macht.

Um eine Fixierung des Basisabschnittes zu ermöglichen, ist in der oberen Wand desselben mindestens eine Bohrung oder ein schlitzförmiger Durchbruch vorgesehen und in der unteren Wand kongruent eine kleinere Bohrung oder ein schlitzförmiger Durchbruch eingebracht. Durch die Bohrung kann beispielsweise eine Schraube hindurchgeführt werden, die in einen Nutenstein bekannter Art einschraubbar ist, der in das C-Profil der Trägerschiene eingesetzt ist. Um eine schnellere Befestigung zu ermöglichen, können aber auch in die Längsschlitze Halteelemente eingesetzt werden, wie sie aus der DE 20 2010 000 545 U1 bekannt sind, die dann mit den Druckkanten auf die Oberseite des Hohlprofils aufgreifen.

Die Erfindung ist nicht an bestimmte Befestigungselemente gebunden, vielmehr müssen lediglich die Bohrungen oder Schlitze entsprechend ausgebildet sein, um die Befestigung wunschgemäß an einer Trägerschiene zu ermöglichen. Es ist ersichtlich, dass durch dieses relativ lange Stützelement mit den beiden Befestigungs- oder Auflageabschnitten ein leichter sperriger Körper gegeben ist, der zudem bei Ablage auf einem Dach nicht leicht herunterfallen kann und dennoch einfach montierbar ist und zugleich die notwendigen Abstände zwischen den seitlichen Abschnitten bzw. den Befestigungsabschnitten definiert, um darauf ein Solarmodul fixieren zu können. Zu diesem Zweck sind an den Befestigungsabschnitten in den Wänden quer zur Längsrichtung verlaufende Schlitze oder in Längsrichtung verlaufende schlitzförmige Durchbrüche vorgesehen. Im Falle der quer verlaufenden Schlitze kann auf einfache Weise die Befestigung mittels eines Nutensteins und eines Klemmkörpers erfolgen, der auf einen Rahmen des Solarmoduls aufgreift. Die Verbindung wird dann mittels einer Schraube hergestellt. Im Falle der Längsschlitzung können die zuvor beispielhaft beschriebenen Halteelemente gemäß der DE 20 2010 000 545 U1 eingesetzt werden. Auf einem solchen Befestigungselement können auch zwei benachbarte Module aufgelegt und gleichzeitig mit seitlich übergreifenden Druckwänden befestigt werden.

Bei der Herstellung eines Stützelementes nach der Erfindung wird das Hohlprofil beispielsweise mittels eines Lasers an den Gehrungswinkeln freigeschnitten, ebenso werden die Bohrungen oder schlitzförmigen Durchbrüche sowie die Schlitze eingebracht, was in bekannter Weise sehr schnell mit einem CNC-geführten Laser-Schneidkopf erfolgen kann. Des Weiteren werden die zungenförmigen Anschläge und Positionierhilfen freigeschnitten, so dass diese sich beim nachträglichen Biegen der seitlichen Abstands- und Befestigungsabschnitte automatisch aufstellen können. Es ist ersichtlich, dass dies eine sehr preiswerte Herstellungsmethode ist, die hier zur Anwendung kommen kann, die es aber auch zugleich ermöglicht, unterschiedliche Höhenabstände individuell für ein Dach fertigen zu können, so dass jede Schräglage individuell eingestellt werden kann. Es brauchen dazu lediglich die seitlichen Abschnitte in ihren Höhenmaßen verändert und die Gehrungsschnitte den geänderten Winkelbedingungen angepasst zu werden. Nach erfolgtem Abwinkeln werden die Gehrungsschnitte verschweißt, so dass ein in sich stabiles Gebilde des Stützelementes für das Solarmodul gegeben ist. Auch können unterschiedliche Größen aus einem Strangprofil auf einfache Weise herausgeschnitten werden.

Wenn das Stützelement so ausgelegt ist, dass es zugleich zwei benachbarte Solarmodule tragen soll, so empfiehlt es sich, zumindest an der unteren Seite des Stützelementes zwei zungenförmige Anschläge parallel vorzusehen, damit beide Solarelemente abgestützt sind. Solche Anordnungen können selbstverständlich auch an dem oberen Befestigungsabschnitt vorgesehen sein.

Grundsätzlich kann die Erfindung für die Fixierung von Solarmodulen verschiedener Bauart angewendet werden, z. B. für Solarkollektormodule, die eine Flüssigkeit, die durch Rohre innerhalb des Moduls fließt, aufwärmen, wobei diese Flüssigkeit dann einem Wärmetauscher in dem Gebäude zugeführt wird, um beispielsweise Brauchwasser zu temperieren. Die Stützelemente können aber auch zum Anordnen von Photovoltaikmodulen verwendet werden, die wesentlich leichter sind und auf Trägerplatinen aufgebracht sind und beispielsweise rahmenlos oder mit einem Rahmen, z. B. einem Aluminium- oder Kunststoffrahmen, umgeben verbaut werden. Diese setzen das auftreffende Sonnenlicht in elektrischen Strom um. Solche Solarmodule können grundsätzlich auf jedem Unterbau, mit oder ohne Unterkonstruktion, mittels nach der Erfindung ausgestalteten Stützelementen lose aufgelegt oder daran angeschraubt oder angeklammert oder mit anderen Befestigungsmitteln befestigt werden.

Der Unterbau kann eine Unterkonstruktion, einen Boden, ein Dach oder eine Ständerkonstruktion umfassen. Von Vorteil ist es, wenn der Unterbau eine geschlossene Fläche, z. B. eine Flachdachfläche oder eine Schrägdachfläche aufweist, so dass die aneinander gereihten Solarmodule, die an den Stützelementen befestigt sind, mit diesen unmittelbar auf die Flächen aufgestellt werden können. Zusätzliche Befestigungen sind nicht erforderlich, wenn beispielsweise durch Windabweisungsbleche eine günstige Aerodynamik geschaffen wird, die eine Kraftkomponente in Richtung des Unterbaus auf die Solarmodule ausübt.

Besonders vorteilhaft ist es, um auch die benötigten Kabel für die Stromabnahme von den Photovoltaikmodulen nicht in dem geschlossenen Hohlprofil einziehen zu müssen, mindestens an dem Basisabschnitt an mindestens einer Längsseite einen U-förmigen Kabelkanal mit obenseitiger oder seitlicher Einlegeöffnung anzuformen bzw. anzubringen. Der Kabelkanal kann selbstverständlich auch mit einer Abdeckung, z. B. einer Kunststoffabdeckung, verschlossen werden. Auch kann zur Fixierung des Basiselementes auf einer Schiene und zur Erhöhung der Steifigkeit das Hohlprofil in der Boden- und/oder der Deckwand mindestens eine Längsrippe und/oder Längssicken oder rillenförmige Verformungen aufweisen.

Üblicherweise weisen solche Unterkonstruktionen Trägerschienen auf, die an Befestigungsflächen oder Befestigungspunkten gegenüber der Erdoberfläche in einem solchen geneigten Winkel angeordnet sind, dass eine möglichst effiziente Umwandlung der Sonnenenergie erreicht wird bzw. die Aufwärmung der Flüssigkeit optimiert wird. Um unabhängig von dem jeweiligen Dachneigungswinkel oder Boden, der Lattenanordnung oder der Trägerkonstruktion den optimalen Neigungswinkel vorgeben zu können, werden die Unterkonstruktionen mit den Stützelementen benötigt. Die Unterkonstruktion ist dabei einschließlich der Stützelemente so auszulegen, dass sie angreifenden Windkräften stand hält und die Solarmodule nicht abgerissen werden können. Dies gilt gleichermaßen auch für die Verbindung mit den Befestigungspunkten an der Unterkonstruktion.

Durch die besondere Ausgestaltung nach der Erfindung ist es möglich, das Stützelement in verschiedenen Ausgestaltungen aus Hohlprofil, vorzugsweise rechteckförmigem Aluminiumrohr vorzufertigen und auf Lager zu halten.

Wenn in das Hohlprofil in Längsrichtung ein Schraubkanal eingearbeitet ist, so können an dem Hohlprofil die Befestigungselemente oder andere Halter auf einfache Weise angeschraubt werden. Grundsätzlich kann in den Schraubkanälen, auch in denen der Befestigungselemente, anstelle einer Gewindelängsrippe eine Profilrippe mit einem stärkeren Querschnittsprofil vorgesehen sein, das zur Sicherung der Schraube von dem Gewinde der Schraube beim Einschrauben verformbar ist. Ein Stützelement kann auch eine Unterkonstruktion ersetzen. Ebenso kann aber auch das Stützelement an eine Profilschiene mit einem längs verlaufenden Schraubkanal angeschraubt werden.

Gemäß einer weiteren Ausgestaltung der Erfindung ist deshalb vorgesehen, dass das Befestigungselement als Anformung zur Befestigung mindestens einen durch die Oberseite zugänglichen, quer zur Längsrichtung des Basisabschnitts verlaufenden Schraubkanal mit in den Seitenwänden eingebrachten, gegeneinander im Steigungsmaß einer einschraubbaren Schraube höhenversetzten Gewindelängsrippen aufweist. Ein solcher Schraubkanal kann zusätzlich oder allein auch in Längsverbindung eingebracht sein.

Schraubkanäle in Aluminiumprofilen einzubringen, ist beispielsweise aus der US-PS-300,159,250 bekannt. An einem Befestigungselement, z. B. einem Aluminiumprofil, können mittels Schrauben beispielsweise ein Winkelelement angeschraubt werden oder auch andere Teile. Dies ist auch bei der erfindungsgemäßen Ausgestaltung des Befestigungselementes vorgesehen, so dass nach dem Aufliegen eines Solarmoduls auf die beiden durch den Basisabschnitt voneinander beabstandeten Befestigungselementen diese mittels Winkelhalter oder U-förmiger Abstandshalter mit Niederdrücklaschen auf einfache Weise anschraubbar sind.

Wenn in der Unterkonstruktion Tragschienen mit C-Profil zur Anwendung kommen, können wie beim gattungsgemäßem Stand der Technik bei der Herstellung des Stützelementes in den Abwinklungsecken gleichzeitig auch Laschen ausgeformt werden, die dann in die Längsschlitze der Tragschiene ausrichtend eingreifen, bevor eine Befestigung mittels einer Befestigungsschraube an einen Nutenstein erfolgt, der in das C-Profil eingeschoben wird.

Anstelle solcher Befestigungen können aber auch Klammerbefestigungen verwendet werden. Hierzu können in der oberen Wand des Basisabschnittes anstelle einer Bohrung ein schlitzförmiger Durchbruch und ein weiterer Schlitz in der Bodenwand des Basisabschnittes eingebracht sein, durch die eine Spreizklammer in das C-Profil eingedrückt werden kann. Die Befestigungselemente, insbesondere jene, die in Verlängerung des Basisabschnittes eingesteckt werden, sollten darüber hinaus Lagerungen bzw. Anschläge aufweisen, damit das Solarmodul in einem bestimmten Neigungswinkel auf die Oberseite aufgelegt werden und sich gleichzeitig abstützen kann, so dass es nur noch seitlich ausgerichtet werden muss, um mittels einer Schraubverbindung über den Schraubkanal an dem Befestigungselement fixiert werden zu können.

Die Verwendung von Befestigungselementen hat zudem den Vorteil, dass weitere Vorrichtungen hieran zur Befestigung eines an der Unterkonstruktion oder dem Dach fixierten Windabweisungsbleches angebracht werden können. Dies ist fertigungstechnisch beispielsweise durch einen hakenförmigen Ansatz realisierbar, der in den abgebogenen Laschen an einem Windabweisungsblech eingehakt werden kann, während das Blech an der anderen Seite an der Unterkonstruktion oder an dem Dach befestigt wird. Hierdurch ist es also auf einfache Weise möglich, eine Windabschattung der Konstruktion gegen einen Fallwind vorzusehen. Dadurch wird erreicht, dass die Befestigung des Solarmoduls auch höheren Windbelastungen standhält. Will man darüber hinaus erreichen, dass seitlich in den durch das Solarmodul, das Windabweisungsblech und der Dachoberfläche gebildeten Kanal keine Luft strömen kann, ist in weiterer Ausgestaltung vorgesehen, dass an den Befestigungselementen auch Seitenbleche, die im Wesentlichen dreieckförmig zugeschnitten sind, angebracht werden können. Diese Bleche können an den seitlichen Stützelementen an dort vorgesehenen Befestigungselementen mittels Schrauben z. B. in dem Schraubkanal ebenfalls fixiert werden und untenseitig an der Unterkonstruktion oder dem Dach. Ebenso ist aber auch eine seitliche Befestigung mittels Schrauben möglich. Um eine zusätzliche Windabweisung beim auftreffenden Wind von unten zu erreichen, können an dem Windabweisungsblech obenseitig auch nach oben vorstehende abgewinkelte Blechstreifen vorgesehen sein. Wenn diese zu der Oberkante des Solarmoduls in einen definierten Abstand stehen, wird sowohl der Fallwind vom Dachfirst als auch der Aufwind abgeleitet und durch die Verwirbelung an den Oberkanten auf das Solarmodul eine in Richtung des Daches wirkende Druckkraftkomponente erzeugt.

Die Erfindung wird nachfolgend anhand der in den Zeichnungen dargestellten Ausführungsbeispiele ergänzt erläutert.

In den Zeichnungen zeigen:
- FIG. 1: eine Seitenansicht eines Stützelementes, dass auf einer Tragschiene befestigt ist, verbunden mit einem Windabweisungsblech,
- FIG. 2: das Stützelement gem. FIG. 1 als Winkelelement,
- FIG. 3: in vergrößerter Darstellung das in FIG. 1 zur Anwendung kommende Befestigungselement in einer Ausgestaltung mit horizontal verlaufendem Halteelement,
- FIG. 4: ein auf den nach oben abgewinkelten Abschnitt des Stützelementes aufsetzbares Befestigungselement mit einem senkrechten Halteansatz,
- FIG. 5: eine Parallelanordnung mehrerer Tragschienen mit in Reihe angeordneten Stützelementen,
- FIG. 6: die Anordnung gem. FIG. 5 mit auf Befestigungselementen aufgelegten und befestigten Solarmodulen in einer symmetrischen Darstellung,
- FIG. 7: eine Seitenansicht in isometrischer Darstellung der Anordnung der Solarmodule auf einem Dach,
- FIG. 8: eine isometrische Darstellung eines Stützelementes mit Anbindung eines Höhenabschnittes mittels steckbarer Verbindungselemente und einer Verlängerung des Basisteils,
- FIG. 9: ein Verbindungselement in Form einer Explosionszeichnung mit einem zweiten Befestigungselement, wie es in Figur 8 dargestellt ist,
- FIG. 10: ein erstes Befestigungselement mit Halteelementen an beiden Seiten zur Verlängerung des Basiselementes eines Stützelementes,
- FIG. 11: eine Reihenanordnung aus vier Stützelementen, die beabstandet zueinander angeordnet sind,
- FIG. 12: in einer isometrischen Darstellung eine einteilige Ausführung eines Stützelementes nach der Erfindung,
- FIG. 13: eine Seitenansicht des Stützelementes nach FIG 12,
- FIG. 14: eine Draufsicht auf das Stützelement nach FIG. 12,
- FIG. 15: eine Vorderansicht des Stützelementes nach FIG. 12,
- FIG. 16: ein Hohlprofil mit Gehrungsschnitten für die Herstellung eines Stützelementes nach FIG. 12 und
- FIG. 17: eine Trägerschiene mit C-Profil zur Befestigung des Stützelementes nach FIG. 12 bis 15, z. B. an der Dachkonstruktion.

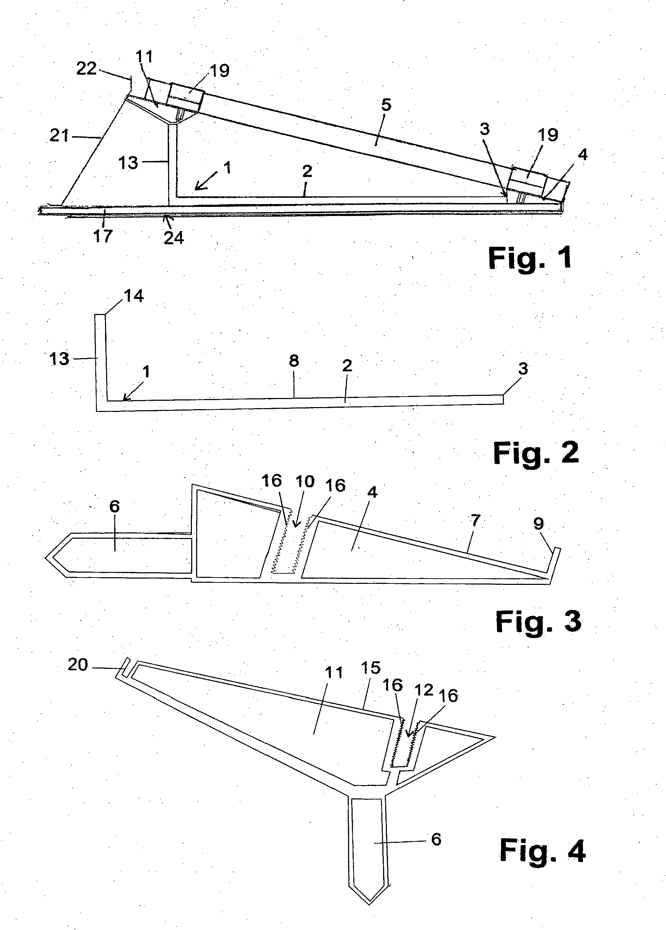

Die Figuren 1 bis 11 zeigen nicht beanspruchte Ausführungen.

In FIG. 1 ist ein Stützelement 1, komplementiert mit einem ersten Befestigungselement 4 und mit einem zweiten Befestigungselement 11 und an einer Tragschiene 17 montiert, die ihrerseits an einer Unterkonstruktion 24 zum Beispiel an einem Dach befestigt ist in einer Seitenansicht dargestellt. In FIG. 2 ist das Stützelement 1 herausgezeichnet dargestellt, so wie es bei der dargestellten Ausgestaltung zur Anwendung kommt. Das Stützelement 1 besteht im Wesentlichen aus einem Basisabschnitt 2 aus einem rechteckförmigen Hohlprofil aus dünnwandigem Aluminium, das auf der linken Seite einen nach oben abgewinkelten, durch Gehrungsschnitt angebrachten und im Abwinklungsbereich angeschweißten Höhenabschnitt 13 aufweist, der im rechten Winkel angeordnet ist. Das so hergestellte Stützelement 1 weist ferner nicht dargestellte Öffnungen in der Oberseite des Basisabschnittes 2 auf, durch die Schrauben durch eine in der Bodenwand vorgesehene Durchgangsbohrung in Nutensteine in dem C-Profil der Tragschiene 17 einschraubbar sind.

Das Stützelement 1 weist rechtsseitig an der Stirnseite 3 eine Öffnung auf, ebenso ist eine Öffnung 14 an dem oberen Ende des nach oben vorstehenden Höhenabschnittes 13 vorgesehen. In die Öffnung an der Stirnseite 3 wird das im Wesentlichen rechteckförmige, linksseitig keilförmige Wände aufweisende Halteelement 6, das einteilig an das Befestigungselement 4 angeformt ist, eingesteckt. Das Befestigungselement 4 besteht aus einem Strangprofil, beispielsweise aus Aluminium, und weist darüber hinaus eine Befestigungsanformung 10 auf, die einen Schraubkanal bildet. Die beiden parallelen Seitenwände sind mit Gewindelängsrippen 16 versehen, die im Steigungsmaß einer einzuschraubenden Schraube gegeneinander höhenversetzt sind und rechtwinklig zu der Oberseite 7 des Befestigungselementes 4 verlaufen. Auch die keilförmige Ausbildung und die Einbringung des Schraubkanals erfolgen bei Herstellung des Strangprofils, ebenso der angeformte Lagerungsansatz 9, gegen den ein Solarmodul 5, wie aus Figur 1 ersichtlich, angelegt werden kann. Die Breite des ersten Befestigungselementes 4 ist so gewählt, dass das angeformte Halteelement 6 in die Öffnung in die Stirnseite 3 des Basiselementes 2 eingeschoben und darin beispielsweise mittels einer Klemmschraube oder Sicherungsschraube verschraubt werden kann. Bei der Sicherungsschraube kann es sich z. B. um eine selbstschneidende Schraube handeln, die nach dem Einsetzen des Halteelementes 6 in eine Bohrung der Oberseite 8 des Basisabschnittes 2 und in eine solche in der oberen Wand des Halteselementes 6 eingeschraubt wird.

Aus Figuren 1 und 3 ist auch ersichtlich, dass die Oberseite 7 in einem definierten Winkel zur Unterseite verläuft. Die Unterseite stellt eine Verlängerung des Basisabschnittes 2 dar. Der Winkel ist so gewählt, dass eine optimale Ausrichtung des Solarmoduls 5 gegenüber der Sonne im montierten Zustand auf einem Dach oder einer Unterkonstruktion 24 gegeben ist. In die Öffnung 14 an dem Höhenabschnitt 13 ist ein Halteelement 6, das die gleiche Grundform aufweist wie das Haltelement 6 an dem ersten Befestigungselement 4 und an dem zweiten Befestigungselement 11 eingesteckt, wodurch dieses Befestigungselement 11 an dem Höhenabschnitt 13 gesichert gehalten ist. Auch hier kann zusätzlich eine Sicherungsschraube den Verbund sichern. Wie ersichtlich, verläuft das Halteelement 6 in senkrechter Richtung nach unten vorstehend und ist einteilig aus dem Strangprofil des zweiten Befestigungselementes 11 ausgeformt. Die Oberseite 15 weist dabei den gleichen Neigungswinkel auf wie die Oberseite 7 des ersten Befestigungselementes 4. Die Oberseiten 7 und 15 fluchten also miteinander, so dass ein Solarmodul 5 auf einfache Weise auflegbar ist. Auch das zweite Befestigungselement 11 weist eine Befestigungsanformung in Form eines Schraubkanals 12 auf. Der Schraubkanal 12 wird durch die seitlichen Gewindelängsrippen 16 bestimmt. Die Höhenlangen der Gewindelängsrippen sind dem Steigungsmaß der einzuführenden Schrauben angepasst und gegeneinander versetzt eingebracht.

Als Besonderheit ist ferner eine hakenförmige Vorrichtung 20 angeformt, in die ein hakenförmiger Abschnitt an einem Windabweisungsblech 21, das in Figur 1 dargestellt ist, eingehängt werden kann. Das Windabweisungsblech 21 weist darüber hinaus einen Blechstreifen 22 auf, der vorsteht und beabstandet zu der Oberseite des Solarmoduls 5 angeordnet ist, so dass zwischen den benachbarten Stützelementen 1 ein Luftspalt entsteht. Durch die Ausbildung des Blechstreifens 22 und der Anordnung des Windabweisungsbleches 21, das zudem mit dem unteren Ende an der Dachkonstruktion oder der Tragschiene 17 befestigt ist, wird ein direkter Eintritt der Fallwinde am Dach in den gebildeten Hohlraum vermieden und ein Unterdruck erzeugt, der auf das Solarmodul eine gegen die Unterkonstruktion wirkende Kraftkomponente erzeugt. Dadurch ist bei Flachdächern eine Fixierung der Stützelemente 1 nicht notwendig.

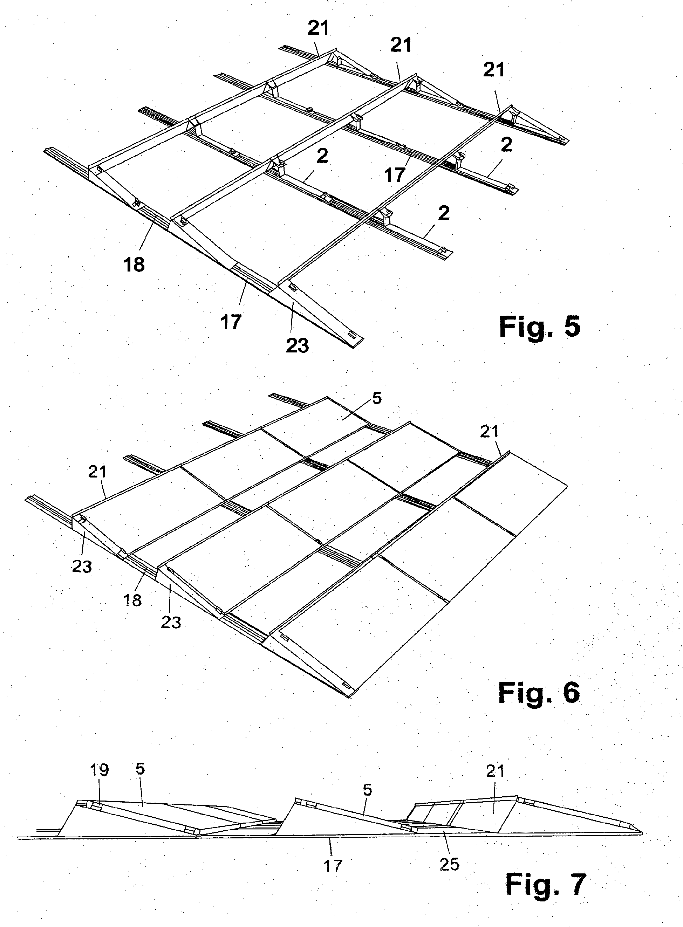

Das Solarmodul 5 wird, wie aus Figur 1 aber auch aus Figuren 5 bis 7 ersichtlich ist, mittels eines Winkelhalters 19 am jeweiligen Befestigungselement 4 oder 11 mittels Schrauben befestigt. Der Winkelhalter 19 ist stufenförmig ausgebildet und weist einen unteren und einen senkrechten Abschnitt sowie einen auf den Rahmen des Solarmoduls 5 aufgreifenden Abschnitt auf und drückt diesen gegen die Oberseiten 7 und 15 der Befestigungselemente 4 und 11.

Je nach Größe der zu verlegenden Solarmodule, die z.B. Photovoltaikmodule sein können, können in Reihe und parallel eine Vielzahl von Tragschienen 17 auf einer Unterkonstruktion angebracht sein, wie aus Figur 5 ersichtlich ist. An diesen Tragschienen 17 können sodann die komplettierten Stützelemente 1 angeschraubt oder angeklammert und die Luftableitbleche 21 installiert werden. Des Weiteren können zur Meidung eines seitlichen Lufteintrittes Seitenbleche 23 an den Stützelementen 1 befestigt sein.

Auf die so vormontierte Aufnahmekonstruktion werden, wie aus Figur 6 ersichtlich, die Solarmodule 5 aufgelegt und in beschriebener Art und Weise z. B. mittels Winkelhalter 19 befestigt. Die einzelnen Solarmodule 5 sind dabei beabstandet zueinander angeordnet, so dass Teile des Daches 25 sichtbar sind. In Figur 7 ist ein Flachdach dargestellt, auf dem die Stützelemente gemäß Figuren 1 bis 4 aufgebracht sind.

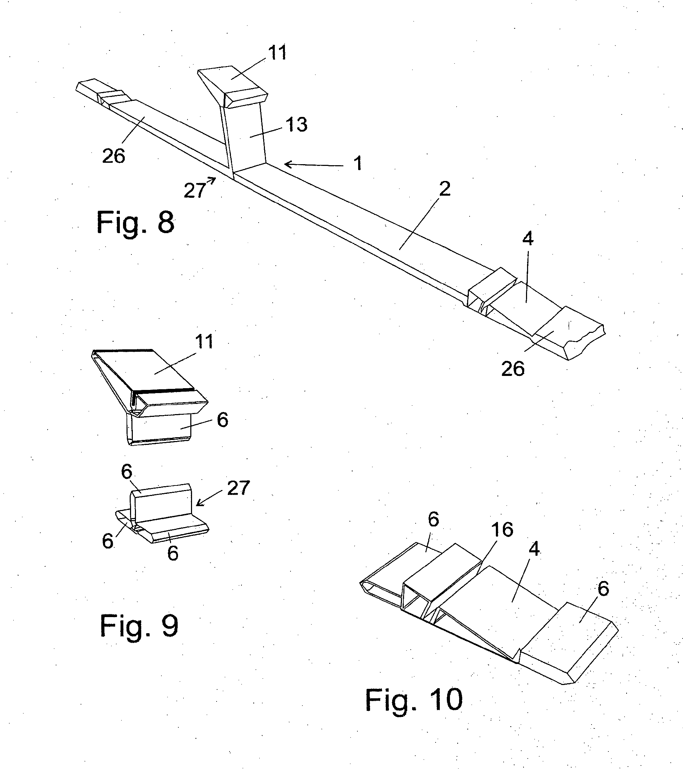

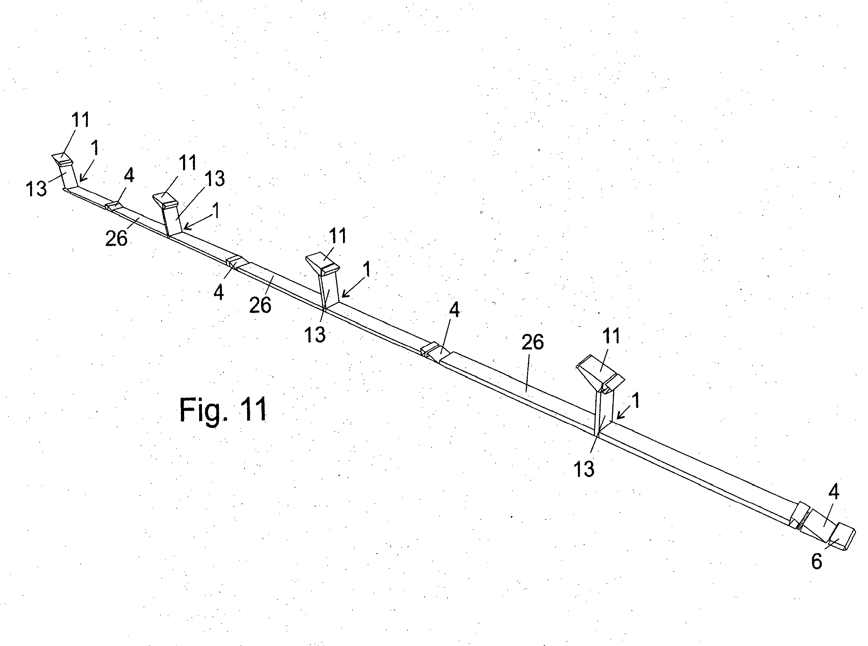

In Figur 8 ist in isometrischer Darstellung ein Ausführungsbeispiel eines Stützelementes 1 wiedergegeben, dessen Basiselement 2 verlängerbar ist. Eine Reihenanordnung aus vier Stützelementen 1, die gleich aufgebaut sind, ist in Figur 11 in einer isometrischen Darstellung zusätzlich dargestellt. Die verwendeten Elemente sind dabei die gleichen. Es handelt sich um einen modularen Aufbau unter Verwendung von Steckelementen, die miteinander verbindbar sind. Das Stützelement 1 besteht aus dem Basiselement 2 und einem Höhenabschnitt 13, der aus einem Hohlprofil besteht. Das Basiselement 2, das aus einem recheckförmigen Hohlprofil besteht, weist beidseitig Öffnungen auf. In die rechte untere Öffnung ist ein erstes Befestigungselement 4 mit einem Halteelement 6 eingesteckt und darin verankert. Das Befestigungselement 4 weist einen Aufbau auf, der dem des ersten Befestigungselementes 4 in Figur 3 entspricht. Auch ist ein Schraubkanal 16 in Form von Gewindelängsrippen vorgesehen, wie aus Figur 10 ersichtlich ist. Die Besonderheit besteht nun darin, das an diesem Befestigungselement 4 unten ein weiteres Halteelement 6 in Reihe zu dem oberen angebracht ist, so dass dieses Halteelement 6 in einen Verlängerungsabschnitt 26 einsteckbar ist, der einen Abstand zwischen den beiden benachbarten Stützelementen 1 herstellt. Es ist ersichtlich, dass die Länge dieses Verlängerungsabschnittes 26 die Distanz zwischen den beiden benachbarten, in Reihe angeordneten Stützelementen 1 definiert. Aus Figur 10 ist ferner ersichtlich, dass die schräge Oberfläche des Befestigungselementes 4 zusammen mit der Rückseite des angeformten Halteelementes 6 zugleich auch die Lagerungsanformung für die Aufnahme des Moduls bildet.

Figur 8 zeigt ferner, das der Basisabschnitt 2 mit dem Verlängerungsabschnitt 26 ebenfalls verbunden ist. Dies erfolgt über ein Verbindungselement 27, das als T-Stück ausgebildet ist und drei Halteelemente 6 aufweist, wie aus Figur 9 im Detail ersichtlich, wobei zwei Halteelemente 6 in Reihe gegenläufig angeordnet sind und das ande re Halteelement 6 dazwischen und nach oben vorsteht, und zwar in einem definierten Winkel zum Basisabschnitt 2. Auf die beiden unteren Halteelemente 6 werden die Enden des Basisabschnittes 2 und des Verbindungsabschnittes 26 aufgesteckt, während auf dem nach oben vorstehenden Halte element 6 der Höhenabschnitt 13 aufgesteckt wird, an dem das zweite Befestigungselement 11 mit dem nach unten vorstehenden Halteelement 6 verankerbar ist, wie anhand der Figur 4 schon beschrieben. Selbstverständlich können auch an dieser Trägerkonstruktion für Solarmodule die Windabweisungsbleche sowie Seitenbleche angebracht werden. Figur 11 zeigt in einer Reihenanordnung vier Stützelemente 1, die mit den zuvor beschriebenen Mitteln zusammengesteckt sind und im Verbund händelbar sind, da der Verbund sehr leicht ist. Der Verbund kann auf ein Dach aufgelegt bzw. daran befestigt werden. Auch können gemäß Figur 5 mehrere solche Reihenanordnungen parallel verlegt sein, um daran die Solarmodule montieren zu können.

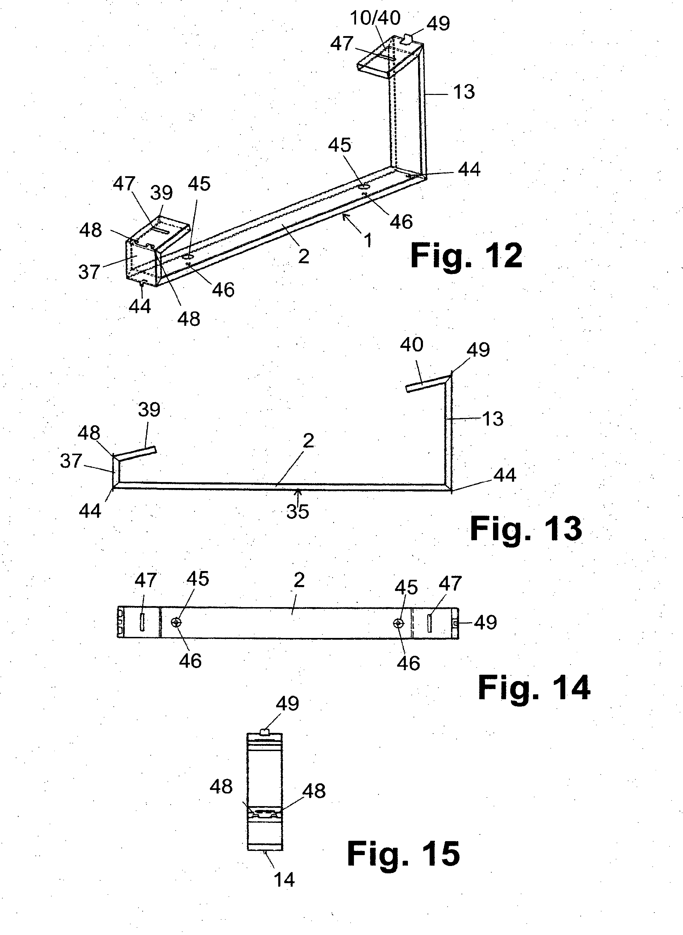

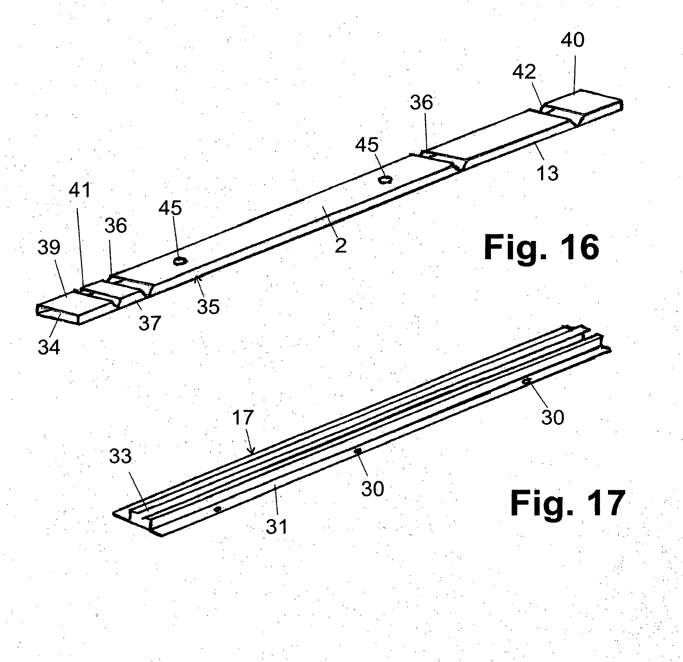

Das in den Figuren 12 bis 16 dargestellte erfindungsgemäße Stützelement 1 besteht aus einem Hohlprofil 34, was aus Figur 16 deutlich ersichtlich ist. Es handelt sich dabei um ein rechteckiges Hohlprofil 34 aus Aluminium, das dünnwandig im Stranggießverfahren hergestellt ist. Die Wandstärke beträgt beispielsweise nur 0,5 mm. Selbstverständlich können auch beim Stranggießen noch Stützstreben mit eingebracht sein, wodurch das Hohlprofil 34 in zwei oder drei Tunnel unterteilt wird oder auch nur abschnittsweise. Aus Figur 16 ist ersichtlich, dass in das so gefertigte Hohlprofil 34 Gehrungsschnitte 36 eingebracht sind, die den Abstandsteil 13 begrenzen. Der Gehrungsschnitt 36 ist entsprechend dem Aufstellwinkel der Seitenteile 37 und 13 eingebracht. Normalerweise handelt es sich um einen 90°-Aufstellwinkel, dieser kann aber auch andere Größen aufweisen, wobei beide Abschnitte 37, 13 in verschiedenen Winkeln verlaufen können. Der Gehrungsschnitt 36 reicht von der Oberseite des Basisabschnittes 2 bis zur Oberseite der unteren Wand 35 des Rohrprofils 34. Es ist ersichtlich, dass die beiden seitlichen Abschnitte 37 und 13 nunmehr auf einfache Weise nach oben biegbar sind und dabei in einer Winkelstellung zum Basisabschnitt 2 verlaufen, der durch die Gehrungswinkel 36 vorgegeben ist. Im Ausführungsbeispiel handelt es sich dabei um eine senkrechte Anordnung der Abschnitte 37 und 13, wie aus den Figuren 12 und 13 ersichtlich ist.

In gleicher Weise wie die Gehrungsschnitte 36 eingebracht sind, nämlich mittels eines Lasers, sind auch die Befestigungsabschnitte 39 und 40 freigeschnitten und weitere Gehrungsschnitte 41 und 42 eingebracht, die die seitlichen Abschnitte, nämlich die Befestigungsabschnitte 39 und 40 definieren. In diese Befestigungsabschnitte 39, 40 sind, was aus den Figuren 12 und 14 ersichtlich ist, schlitzförmige Befestigungsausnehmungen 47 bzw. Durchbrüche eingearbeitet, die mindestens in der oberen Wand vorgesehen sind, die sich an dem Hohlprofil 34 gemäß Figur 16 an der Unterseite befinden. In diese Befestigungsausnehmungen 47 können Mutterhalter oder Klemmkörper eingesetzt werden, in die Schrauben einschraubbar sind, mit deren Hilfe Halter an den Befestigungsabschnitten 39 und 40 befestigbar sind, die auf die Rahmen der aufzusetzenden und daran zu befestigenden Solarmodule befestigbar sind.

An dem Basisabschnitt 2 sind ferner obenseitig größere Bohrungen 45 in die obere Wand eingebracht und untenseitig kleinere Bohrungen 46, so dass Befestigungsschrauben oder Klemmelemente einführbar sind, die beispielsweise in den Längsschlitz 33 in der in Figur 5 dargestellten Tragschiene 17 einsetzbar sind. Die Schrauben können jeweils in einen in das C-Profil der Tragschiene 17 eingesetzten Nutenstein eingeschraubt werden. Andere Befestigungen sind aber auch möglich, so z. B. Klemm- oder Spreizbefestigungselemente, die durch Verspannen die Seitenwände des C-Profilschlitzes untergreifen. Die Tragschiene 17 selbst wird mittels seitlicher Befestigungsstreifen 31 und darin eingebrachter Bohrungen 30 an der Lattung, an dem Boden oder an sonstigen Aufnahmen eines Daches mittels Schrauben befestigt (FIG. 17).

Das Rohrprofil 34 gemäß Figur 16 wird nach dem Zuschneiden und dem Einbringen der Gehrungsschnitte 36, 41 und 22 gebogen und mittels eines Automaten an den aneinanderstoßenden Seitenwänden der Gehrungsschnitte verschweißt, so dass das aus Figur 12 in der isometrischen Darstellung abgebildete Stützelement 1 entsteht. Die Befestigungsabschnitte 39 und 40 sind relativ kurz gehalten, um Material einzusparen. Das Gebilde ist jedoch sperrig und so auf einfache Weise auf ein Dach selbsthaltend auflegbar und dennoch sehr leicht, da es aus einem dünnwandigen Rohrprofil 34 gefertigt ist.

In besonderer Weise sind Positionierhilfen und Anschläge angebracht, die aus der Blechwandung des Hohlprofils 34 freigeschnitten sind und sich beim Biegen der Höhenabschnitte 37, 13 automatisch aufstellen. Hierzu werden die zungenförmigen Anschläge 48 und 49 in den oberen Wänden, die sich in Figur 15 unten befinden, und an den Befestigungsabschnitten 39 und 40 freigeschnitten, bevor die Umbiegung der Befestigungsabschnitte 39 und 40 erfolgt. Für die Herstellung der als Positionierhilfe dienenden Laschen 44 werden diese aus der unteren Wand 35 des Basisabschnitts 2 freigeschnitten, so dass sie sich beim Umbiegen der Abschnitte 37 und 13 automatisch aufstellen. Die Laschen 44 sind so bemessen, dass ihre Breite der lichten Weite des Längsschlitzes 33 der Tragschiene 17 entspricht, so dass das Stützelement 1 einfach auf diese ausgerichtet aufsetzbar ist. Danach ist die Befestigung über die Bohrungen 45 und 46 in dem Basisabschnitt 2 möglich. Die Bohrung 45 in der oberen Wand des Basisabschnitts ist größer ausgeführt als die Bohrung 46 in der unteren Wand 35, so dass eine Schraube mit ihrem Schraubenkopf bis auf die untere Wand 35 eingeschraubt werden kann und eine Anbindung nur über die untere Wand des Stützelementes 1 erfolgt. Anstelle solcher Bohrungen können aber auch Schlitze eingebracht sein, in die rastende Klemmkörper eingesetzt werden, um eine Fixierung an der Tragschiene 17 zu ermöglichen. Ein Beispiel dafür ist der DE 20 2010 000 545 U1 zu entnehmen.

Figur 17 zeigt eine Tragschiene 17 mit einem C-Profil 33 an dem seitlichen Befestigungsstreifen 31 mit Bohrungen 30 zum Fixieren an einem Dach mittels Schrauben.

### Bezugszeichenliste

- 1: Stützelement
- 2: Basisabschnitt
- 3: Stirnseite
- 4: erstes Befestigungselement
- 5: Solarmodul
- 6: Halteelement
- 7: Oberseite (erstes Befestigungselement)
- 8: Oberseite (Basisabschnitt)
- 9: Anformung Lagerung
- 10: Anformung Befestigung
- 11: zweites Befestigungselement
- 12: Anformung Befestigung
- 13: Abstandsabschnitt / Höhenabschnitt
- 14: Öffnung
- 15: Oberseite
- 16: Gewindelängsrippen
- 17: Tragschiene
- 18: Längsschlitz
- 19: Winkelhalter
- 20: Vorrichtung
- 21: Windabweisungsblech
- 22: Blechstreifen
- 23: Seitenbleche
- 24: Unterkonstruktion
- 25: Dach
- 26: Verlängerungsabschnitt
- 27: Verbindungselement
- 30: Bohrung
- 31: Befestigungsstreifen
- 33: Längsschlitz
- 34: Hohlprofil
- 35: Wand
- 36: Gehrungsschnitt
- 37: Abschnitt
- 39: Befestigungsabschnitt
- 40: Befestigungsabschnitt
- 41: Gehrungsschnitt
- 42: Gehrungsschnitt
- 44: Lasche
- 45: Bohrung
- 46: Bohrung
- 47: Befestigungsausnehmung
- 48: Anschlag
- 49: Anschlag

## Patentansprüche

1. Stützelement zur Anbringung eines Solarmoduls auf einer Unterkonstruktion, wobei
- das Stützelement (1) mit einem Basisabschnitt (2) auf eine Unterkonstruktion aufstellbar ist,
- der Basisabschnitt (2) aus einem gestreckten Hohlprofil (34) besteht,
- an dem Hohlprofil (34) an einer Stirnseite ein erstes Befestigungselement für das Solarmodul vorgesehen ist,
- die Oberseite des ersten Befestigungselementes mindestens eine Anformung (48) zur Lagerung eines Bereiches des auflegbaren Solarmoduls aufweist und
- an der anderen Stirnseite des Basisabschnitts (2) ein zweites Befestigungselement mindestens mit einer Anformung (49) zur Befestigung des gegenüberliegenden Bereiches des aufgelegten Solarmoduls vorgesehen ist, **dadurch gekennzeichnet,**
- **dass** das erste Befestigungselement aus einem durch Gehrungsschnitte (36, 41) freigeschnittenen, nach oben abgewinkelten Höhenabschnitt (37) und einem demgegenüber durch einen eingebrachten weiteren Gehrungsschnitt (41) freigeschnittenen abgewinkelten Befestigungsabschnitt (39) des Hohlprofils (34) besteht, der in einem definierten Winkel oberhalb des Basisabschnittes (2) schräg verläuft,
- **dass** das zweite Befestigungselement aus einem am anderen Ende des Basisabschnittes (2) durch eingebrachte Gehrungsschnitte (36, 42) freigeschnittenen Abstandsabschnitt (13), der länger ist als der Höhenabschnitt (37) des ersten Befestigungselementes und ebenfalls gegenüber dem Basisabschnitt (2) vorsteht, und aus einem Befestigungsabschnitt (40) besteht, der in Richtung des ersten Befestigungsabschnittes (39) oberhalb des Basisabschnittes (2) verläuft, und
- **dass** die Gehrungsschnittkanten, die nach dem Abwinkeln aneinander liegen, mindestens punktweise miteinander verschweißt sind.

2. Stützelement nach Anspruch 1, **dadurch gekennzeichnet, dass** das Hohlprofil im Querschnitt rechteckförmig, rund, polygonal oder quadratisch ausgebildet ist und aus Aluminium, beschichtetem Metall, Edelstahl oder Kunststoff besteht.

3. Stützelement nach Anspruch 1, **dadurch gekennzeichnet , dass** das Befestigungselement als Anformung zur Befestigung des Solarmoduls mindestens einen durch die Oberseite zugänglichen, quer zur Längsrichtung des Basisabschnitts verlaufenden Schraubkanal (10) mit in den Seitenwänden eingebrachten, gegeneinander im Steigungsmaß einer einschraubbaren Schraube höhenversetzten Gewindelängsrippen aufweist.

4. Stützelement nach Anspruch 1, **dadurch gekennzeichnet, dass** mindestens an dem Basisabschnitt (2) an mindestens einer Längsseite ein U-förmiger Kabelkanal mit obenseitiger oder seitlicher Einlegeöffnung vorgesehen ist.

5. Stützelement nach Anspruch 1, **dadurch gekennzeichnet, dass** an der Unterseite des Basisabschnitts (2) mindestens ein zapfenförmiges Element oder eine Lasche vorsteht, das oder die zur Ausrichtung des Stützelementes (1) in einen Längsschlitz in der Unterkonstruktion eingreift, dass in der oberen Wand des Basisabschnitts (2) mindestens eine Bohrung (45) oder mindestens ein schlitzförmiger Durchbruch und in der unteren Wand kongruent eine kleinere Bohrung (46) oder ein schlitzförmiger Durchbruch geringerer Breite eingebracht sind und dass durch Einsetzen eines Befestigungselementes in die Bohrung bzw. in den Durchbruch das Stützelement an der Unterkonstruktion fixierbar ist.

6. Stützelement nach Anspruch 1, **dadurch gekennzeichnet, dass** an dem ersten Befestigungselement, das gegenüber dem zweiten niedriger angeordnet ist, mindestens im Bereich der unteren Kante als Lagerungsanformung ein Anschlagswinkel angeformt ist, der gleich oder kleiner ist als die Breite des ersten Befestigungselementes.

7. Stützelement nach Anspruch 1, **dadurch gekennzeichnet, dass** an dem zweiten Befestigungselement Vorrichtungen zum Befestigen eines an dem Unterbau, der Unterkonstruktion oder dem Dach fixierten Windabweisungsbleches vorgesehen sind, welches sich in einem stumpfen Winkel zum Solarmodul erstreckt und die Öffnung zwischen Solarmodul und Dach oder Boden verschließt.

8. Stützelement nach Anspruch 7, **dadurch gekennzeichnet, dass** das Windabweisungsblech einen nach oben abgewinkelten, in etwa der Höhe der Oberseite des Solarmoduls endenden Blechstreifen aufweist.

9. Stützelement nach Anspruch 1, **dadurch gekennzeichnet, dass** zwischen den beiden Befestigungselementen dreieckförmige Seitenbleche zur Vermeidung des Eintritts eines Luftstroms unter das oder die in Reihe angeordneten Solarmodule anschraubbar sind.

## Claims

1. Support element for mounting a solar module on a substructure, wherein
- the support element (1) can be placed by a base section (2) on a substructure,
- the base section (2) consists of an elongate hollow section (34),
- a first fastening element for the solar module is provided at the hollow section (34) at one end,
- the upper side of the first fastening element has at least one shaped portion (48) for mounting one region of the solar module which can be placed thereon and
- a second fastening element with at least one shaped portion (49) for fastening of the opposite region of the solar module placed thereon is provided at the other end of the base section (2),
**characterised in that**
- the first fastening element consists of an upwardly angled height section (37), which is cut free by mitre cuts (36, 41), and an angled fastening section (39), which is cut free relative thereto by formation of a further mitre cut (41), of the hollow section (34), the fastening section extending at an inclination at a defined angle above the base section (2),
- the second fastening element consists of a spacer section (13), which is cut free at the other end of the base section (2) by formation of mitre cuts (36, 42) and which is longer than the height section (37) of the first fastening element and similarly protrudes relative to the base section (2), and a fastening section (40), which extends in the direction of the first fastening section (39) above the base section (2), and
- the mitre-cut edges, which after bending bear against one another, are welded together at least at points.

2. Support element according to claim 1, **characterised in that** the hollow section is constructed to be rectangular, round, polygonal or square in cross-section and consists of aluminium, coated metal, stainless steel or plastic.

3. Support element according to claim 1, **characterised in that** the fastening element as shaped portion for fastening of the solar module has at least one screw channel (10), which is accessible via the upper side and which extends transversely to the longitudinal direction of the base section, with threaded longitudinal ribs which are formed in the side walls and which are offset in height relative to one another in the pitch dimension of a screw which can be screwed in.

4. Support element according to claim 1, **characterised in that** a U-shaped cable channel with an insert opening at the top or at the side is provided at least at the base section (2) at at least one longitudinal side.

5. Support element according to claim 1, **characterised in that** at least one pin-shaped element or strap, which for orientation of the support element (1) engages in a longitudinal slot in the substructure, protrudes at the lower side of the base section (2), that at least one bore (45) or at least one slot-shaped passage is formed in the upper wall of the base section (2) and congruently a smaller bore (46) or a slot-shaped passage of smaller width is formed in the lower wall and that through insertion of a fastening element into the bore or into the passage the support element is fixable to the substructure.

6. Support element according to claim 1, **characterised in that** an abutment bracket which is the same as or smaller than the width of the first fastening element is formed at the first fastening element, which is arranged to be lower by comparison with the second fastening element, at least in the region of the lower edge as integrally formed mounting portion.

7. Support element according to claim 1, **characterised in that** devices for fastening a wind deflector plate, which is fixed to the sub-construction, the substructure or the roof and which extends at an obtuse angle to the solar module and closes the opening between solar module and roof or base, are provided at the second fastening element.

8. Support element according to claim 7, **characterised in that** the wind deflector plate comprises an upwardly angled sheet-metal strip terminating at approximately the height of the upper side of the solar module.

9. Support element according to claim 1, **characterised in that** triangular side plates for avoidance of entry of an air flow below the solar module or solar modules arranged in a row can be screwed in place between the two fastening elements.

## Revendications

1. Élément d'appui pour la pose d'un module solaire sur une sous-structure, dans lequel
- l'élément de support (1) peut être posé avec une partie de base (2) sur une sous-structure,
- la partie de base (2) est réalisée dans un profilé creux (34) étiré,
- un premier élément de fixation pour le module solaire est prévu sur une face frontale du profilé creux (34),
- la partie supérieure du premier élément de fixation comporte au moins une saillie (48) pour le montage d'une zone du module solaire à poser, et
- sur l'autre face frontale de la partie de base (2) est prévu un deuxième élément de fixation muni d'au moins une saillie (49) pour fixer la zone opposée du module solaire posé,
**caractérisé**
- **en ce que** le premier élément de fixation est constitué par une partie verticale (37) coudée vers le haut, dégagée par des coupes en onglet (36, 41), et par une partie de fixation (39) coudée du profilé creux (34), laquelle est dégagée par une coupe en onglet (41) et s'étend en oblique selon un angle défini au-dessus de la partie de base (2),
- **en ce que** le deuxième élément de fixation est constitué par une partie d'écartement (13) dégagée à l'autre extrémité de la partie de base (2) par des coupes en onglet (36, 42) réalisées, laquelle est plus longue que la partie verticale (37) du premier élément de fixation et s'avance également en saillie par rapport à la partie de base (2), et par une partie de fixation (40) qui s'étend vers la première partie de fixation (39) au-dessus de la partie de base (2), et
- **en ce que** les arêtes des coupes en onglet, qui sont adjacentes après avoir été coudées, sont soudées entre elles au moins par points.

2. Élément d'appui selon la revendication 1, **caractérisé en ce que** le profilé creux est configuré avec une section transversale rectangulaire, ronde, polygonale ou carrée et est réalisé en aluminium, en métal revêtu, en acier inoxydable ou en matière plastique.

3. Élément d'appui selon la revendication 1, **caractérisé en ce que** l'élément de fixation comporte pour former la saillie pour la fixation du module solaire au moins un canal pour vis (10), qui est accessible par le côté supérieur, s'étend transversalement à la direction longitudinale de la partie de base et est muni de nervures longitudinales filetées, réalisées dans les parois latérales et décalées en hauteur les unes par rapport aux autres selon la valeur du pas d'une vis à visser dans ledit canal.

4. Élément d'appui selon la revendication 1, **caractérisé en ce qu'**un canal pour câble en forme de U, muni d'une ouverture d'introduction supérieure ou latérale, est prévu au moins sur la partie de base (2) sur au moins un côté latéral.

5. Élément d'appui selon la revendication 1, **caractérisé en ce que** sur le côté inférieur de la partie de base (2) s'avance en saillie au moins un élément en forme de téton ou une patte qui, pour aligner l'élément de support (1), s'engage dans une fente longitudinale dans la sous-structure, **en ce que** dans la paroi supérieure de la partie de base (2) est ménagée au moins une forure (45) ou au moins une percée en forme de fente, et dans la paroi inférieure est ménagée de manière congruente une forure (46) plus petite ou une percée en forme de fente avec une plus faible largeur, et **en ce que**, par l'introduction d'un élément de fixation dans la forure ou dans la percée, l'élément de support peut être fixé sur la sous-structure.

6. Élément d'appui selon la revendication 1, **caractérisé en ce que** sur le premier élément de fixation, qui est disposé plus bas que le deuxième élément de fixation, au moins dans la zone de l'arête inférieure, est formé un angle de butée formant une saillie de montage qui est égale ou inférieure à la largeur du premier élément de fixation.

7. Élément d'appui selon la revendication 1, **caractérisé en ce que** sur le deuxième élément de fixation sont prévus des dispositifs pour fixer une plaque coupe-vent, qui est fixée au soubassement, à la sous-structure ou au toit et qui forme un angle obtus avec le module solaire et ferme l'ouverture entre le module solaire et le toit ou le fond.

8. Élément d'appui selon la revendication 7, **caractérisé en ce que** la plaque coupe-vent comporte une bande de tôle coudée vers le haut et se terminant sensiblement à la hauteur de la face supérieure du module solaire.

9. Élément d'appui selon la revendication 1, **caractérisé en ce que** des tôles latérales triangulaires peuvent être vissées entre les deux éléments de fixation pour éviter la pénétration d'un flux d'air sous le module solaire ou les modules solaires disposés en rangs.
